# EUROPÄISCHE PATENTANMELDUNG

(11) **EP 0 554 796 A1**
(43) Veröffentlichungstag der Anmeldung: **11.08.1993**
(21) Anmeldenummer: 93101341.1
(22) Anmeldetag: 29.01.1993
(51) Int. Cl.: B32B 31/00, B29C 59/04

(54) **Verfahren und Vorrichtung zum Prägen und Kaschieren von Folienmaterial**

(30) Priorität: 01.02.1992 DE 4202920
(71) Anmelder: U.S.P. TRANSFERS INDUSTRIELLE FARBÜBERTRAGUNG GESELLSCHAFT mbH, A-9020 Klagenfurt (AT)
(72) Erfinder: Smuck,Gerhard, A-9020 (AT); Lengfelder,Erhard, A-9061 Wölfnitz (AT); Niessner,Reinhard, A-9500 Villach (AT)
(74) Vertreter: Riebling, Peter, Dr.-Ing., Patentanwalt

(57) **Zusammenfassung**

Ein Verfahren zur Durchlauf-Laminierung von Folienmaterial verwendet ein oberes, umlaufendes Band, welches mit seinem unteren Band-Trum in Richtung parallel zu einem zu beschichtenden Körper (Laminat) geführt wird, wobei in den Zwischenraum zwischen diesem unteren Band-Trum und dem zu beschichtenden Körper eine Beschichtungsfolie eingeführt wird, die auf den zu beschichtenden Körper unter Anwendung von Druck und Hitze laminiert wird. Zur Behandlung der Oberfläche des Laminats ist mindestens ein Transportmedium in Form eines Texturbandes oder einer Texturtasche vorgesehen, welches das Folienmaterial zwischen sich aufnimmt und von einer oder mehreren Heizzonen in ein oder mehrere Kühlzonen transportiert.

## Beschreibung

Ein Verfahren der eingangs genannten Art ist beispielsweise mit dem Gegenstand der DE 37 19 976 bekannt geworden.
Bei diesem bekannten Verfahren handelt es sich um eine Bandpresse, bei der ein oberes, umlaufendes Band mit seinem unteren Band-Trum in Richtung parallel zu einem zu beschichtenden Körper geführt wird. In den Zwischenraum zwischen dem unteren Band-Trum und den zu beschichtenden Körper wird eine Beschichtungsfolie eingeführt, welche auf die mitlaufende Spanplatte durch Druck und Temperatur kaschiert wird.

Hierbei gibt es eine Heizzone, innerhalb der die aufzubringende Folie wärmeschmelzbar gemacht wird, um in dieser Weise auf den zu beschichtenden Körper (Spanplatte) aufgebracht zu werden. Der Heizzone schließt sich eine Kühlzone an, wo eine gewisse Formstabilisierung der aufgebrachten Folie erreicht werden soll.

Bei diesem bekannten Verfahren ist es jedoch nicht möglich, relativ dünne Körper zu beschichten, weil die Formstabilität der zu beschichtenden Körper nicht mehr gewährleistet ist.
Bei dieser bekannten Presse wird nämlich die Heizzone und die Kühlzone in Form von absenkbaren Stempeln auf die zu beschichtende Oberfläche herabgesenkt, wobei sogar noch ein luftdichter Abschluß für die Einleitung von einem oder mehreren Druckmedien erreicht werden soll.

Durch die Notwendigkeit der Verwendung eines absenkbaren Stempels mit umlaufenden Dichtlippen besteht der Nachteil, daß hierbei eine Druckkraft auf den zu beschichtenden Körper aufgebracht wird, was verhindert, daß dieser Körper dünn ausgebildet sein könnte, weil sich der Körper sonst verformen würde.

Werkstoffbahnen, die bei den bekannten Verfahren beschichtet werden oder laminiert werden, müssen also eine relativ große Dicke aufweisen, weil bei diesen bekannten Verfahren kein Gegenlager vorhanden ist, welches die von der Presse nach unten ausgeübten Druckkräfte aufnehmen könnte.

Zwar ist bei diesem bekannten Verfahren auch die Verwendung einer untenliegenden Druckplatte bekannt, die jedoch nicht mitläuft, was wiederum mit Nachteilen verbunden ist.

Bei der Ausübung eines derartigen Verfahrens besteht der Nachteil, daß eine demgestaltete Maschine nur relativ kostenaufwendig herzustellen ist, denn man benötigt ein hochbelastbares Stahlband, in dessen Innenraum die mit Stempeln absenkbaren Heiz- und Kühlkammern angeordnet sind, was einen hohen Maschinenaufwand bedingt.

Ein weiterer Nachteil ist, daß bei diesem bekannten Verfahren nur mit einem flächenmässig aufzubringenden Druck gearbeitet wird, was ebenfalls bei der Verarbeitung dünnschichtiger Folienbahnen als nachteilig empfunden wird.

Der vorliegenden Erfindung liegt deshalb die Aufgabe zugrunde, ein Verfahren der eingangs genannten Art so weiterzubilden, daß mit wesentlich geringerem Maschinenaufwand und wesentlich geringeren Herstellungskosten sowie bei verbesserter Verarbeitungsgenauigkeit auch dünne, mehrschichtige Folien verarbeitet werden können.

Zur Lösung der gestellten Aufgabe ist die Erfindung durch die technische Lehre des Anspruchs 1 gekennzeichnet.

Wesentliches Merkmal des erfindungsgemässen Verfahrens ist, daß nun eine teure und großbauende Bandpresse vermieden wird, in deren Innenraum Heiz- und Kühlzonen angeordnet sind, sondern daß die besagten Heiz- und Kühlzonen außerhalb dieses Bandes angeordnet sind, und zwar gegenüberliegend diesem Band.

Damit ergibt sich der wesentliche Vorteil, daß man nun dieses Band als Auflagefläche für die zu laminierenden Folien verwenden kann, welches Band hierbei mitläuft und daß man die Heiz- und Kühlzonen gegenüberliegend diesem Band und außerhalb dieses Bandes anordnen kann.

Mit dieser Art der Ausbildung eines Verfahrens sind mehrere Vorteile gleichzeitig erreicht:
Zunächst wird ein wesentlich kostengünstigerer Aufbau erreicht, weil die vorher notwendig gewesenen Einbauten in einem umlaufenden Stahlband entfallen und weil demzufolge auch das auch bei der Erfindung vorhandene Band wesentlich kleiner dimensioniert werden kann und nicht mehr aus Stahl bestehen muß. Ferner besteht der Vorteil, daß durch die Anordnung von Heiz- und Kühlzonen außerhalb eines Stahlbandes evtl. bestehende Dichtigkeitsprobleme, wie sie beim Stand der Technik bestanden, nicht mehr bestehen, so daß insgesamt die Maschine wesentlich kostengünstiger herstellbar ist.

Insbesondere, wenn man als Heiz- und Kühlzonen entsprechend ausgebildete Heiz- und Kühlwalzen verwendet, ergibt sich der Vorteil einer weiteren Kosteneinsparung, denn derartige Heiz- und Kühlwalzen sind wesentlich kostengünstiger herstellbar, als die in der genannten Patentschrift genannten, aufwendig gestalteten Heiz- und Kühlzonen, die mit entsprechenden fluidischen Medien versorgt werden müssen.

Durch die dichte Aufeinanderfolge von Heiz- und Kühlzonen, wobei auch mehrere Heizzonen sich mit mehreren Kühlzonen abwechseln können, ist der Vorteil erbracht, daß die Heizleistung gezielt und gesteuert an einen bestimmten Punkt in das zu verarbeitende Material eingeleitet werden kann, während dies bei dem bekannten Verfahren nicht der Fall ist.

Vorstehend wurde bereits schon erwähnt, daß bei dem Verfahren nach der DE 37 19 976 der Nachteil besteht, daß durch die Aufbringung von Druckkräften im Innenraum des Stahlbandes in Richtung auf die zu verarbeitende Materialschicht der Nachteil besteht, daß die Materialschicht sich bei thermoplastischer Verformung ebenfalls verformt, z.B. in die Breite und in die Länge oder sogar unkoordiniert nachgibt, was zu einer Beeinträchtigung der Dimensionsgenauigkeit (Wiederholgenauigkeit) führt. Demzufolge wäre es nicht möglich, mit einer Anordnung nach der deutschen Patentschrift 37 19 976 dünnschichtiges Folienmaterial zu verarbeiten, wie z.B. PVC-Folien, Papier- und Magnetfolien, Streifen und allgemein Kunststoff- und Papierprodukte mit relativ geringerer Materialstärke im Bereich von 60 Mikrometer bis z.B. einem oberen Bereich von 2 mm.

Demzufolge besteht bei dem vorliegenden Verfahren der Vorteil, daß durch die Anwendung eines unteren mitlaufenden Bandes, demgegenüberliegend die Walzenspalte für die Heiz- und Kühlwalzen angeordnet sind, sehr dünnschichtiges Material mit großer Wiederholgenauigkeit bearbeitet werden kann, weil praktisch keine einseitige Druckaufbringung gegeben ist. Bei der DE 37 19 976 war eine einseitige Druckaufbringung durch die in dem umlaufenden Band angeordneten, stempelförmig bewegbaren, Einbauten gegeben, was bei der Erfindung vermieden wird. Bei der Erfindung wird im wesentlichen eine Druckaufbringung auf die zu verarbeitende Materialbahn vermieden.

Nach dem Gegenstand des Hauptanspruchs ist das Verfahren nach der vorliegenden Erfindung dadurch gekennzeichnet, daß zur Behandlung der Oberfläche des Folienmaterials (Laminat) mindestens ein Transportmedium (Texturband oder Texturtasche) vorgesehen ist, welches das Folienmaterial zwischen sich aufnimmt und von einer oder mehreren Heizzonen in ein oder mehrere Kühlzonen transportiert.

Diese Texturierung kann durch verschiedene Maßnahmen erreicht werden. In einer ersten bevorzugten Ausführungsform zur Ausübung dieses Verfahrens ist vorgesehen, daß als Transportmedium ein Texturierband oder eine Texturiertasche mitläuft, welches parallel zu der Materialbahn an der Oberseite der Materialbahn (Laminat) mit in die Heiz- und Kühlzonen eingespeist wird.

Diese Anordnung hat sich als sehr vorteilhaft erwiesen, weil sich ein einfacher Maschinenaufbau ergibt, nachdem man das Texturband auch durch die Heizzonen hindurch laufen kann, ohne daß es dort zu einer unerwünscht bleibenden Texturierung des Materials kommt, weil das Material in diesen Bereichen verformbar ist und die Texturierform (Oberfläche) nicht annimmt. Erst wenn das Material in der Kühlzone einigermassen fixiert ist (d.h. in einem zähflüssigen Zustand verformbar ist) erfolgt dort die Texturierung.

Hierbei ist wesentlich, daß das mitlaufende Texturband oder die Texturiertasche stets vorhanden sein muß, um eine ausreichende Führung der zu verarbeitenden Materialbahn her zu gewährleisten. Hierbei gibt es nach bevorzugten Ausführungsformen der vorliegenden Erfindung mehrere Möglichkeiten zur Ausgestaltung des Texturbandes:

In einer ersten Ausführungsform ist vorgesehen, daß das Texturband aus einem hochglänzenden Papiermaterial besteht, was der verarbeiteten Materialbahn dann eine glänzende Oberfläche verleiht. In einer anderen Ausgestaltung ist vorgesehen, daß das Texturband beliebige Texturierungen (Oberflächeneffekte) aufweisen kann, wie z.B. ein Ledereffekt, Narbeneffekte, Raueffekte, Matteffekte, überhaupt Strukturierungen, welche die Oberfläche der verarbeiteten Materialbahn dreidimensional verformt.

Wichtig ist die Unterscheidung zu den ansich bekannten Doppelbandpressen, bei denen es bekannt ist, ein unteres Stahlband einem gegenüberliegenden oberen Stahlband gegenüberzustellen und in den Zwischenraum zwischen diesen beiden Stahlbändern die Verarbeitung der Materialschichten zu bewerkstelligen. Bei diesen Doppelbandpressen besteht der wesentliche Nachteil, daß ein oberes, mitlaufendes Stahlband sehr aufwendig und teuer ist und daß dann die Aufbringung von Heiz- und Kühlleistung nicht mehr in der beschriebenen, vorteilhaften Weise erfolgen kann, wie es bei der vorliegenden Erfindung obenstehend beschrieben wurde. Derartige Doppelbandpressen mit kostenaufwendigen Maschinen sind für die Herstellung von dünnschichtigen Folienaufbauten nicht geeignet, weil eine große Beschädigungsgefahr für die umlaufenden Stahlbänder besteht. Wenn eines der Stahlbänder nur durch einen Kratzer beschädigt ist, wird dieser Kratzer auf der Materialbahn abgebildet und dieses Stahlband muß in aufwendiger Weise ausgetauscht werden. Dies entfällt nach der Erfindung mit einem mitlaufenden Texturband, welches bevorzugt aus einem Papier oder sonstigem, relativ kostengünstigen Material besteht. Bei der Verwendung von Stahlbändern ist dann erfindungsgemäss vorgesehen, daß das Laminat in Texturtaschen als Transportmedium eingelegt wird, wodurch ein unmittelbarer Kontakt mit dem Stahlband vermieden wird.

Zwar kann bei einer Doppelbandpresse der herkömmlichen Art auch ein Texturband mitgefahren werden. Hier zeigen sich aber die Vorteile der Erfindung, die allein mit einem Texturband auskommt, ohne ein mitlaufendes Band-Trum aus Stahl verwenden zu müssen.

Statt dem mitlaufenden Stahlband kann demzufolge nach der technischen Lehre der Erfindung auch ein mitlaufendes Papierband verwendet werden, wobei dieses Papierband in der oben beschriebenen Weise entweder glatt und glänzend ausgebildet sein kann oder die Texturierungen aufweisen kann, die obenstehend beschrieben wurden.

Ebenso ist es möglich, dieses Band als Kunststoffband auszubilden.

Insgesamt ergeben sich somit mit dem beschriebenen Verfahren die wesentlichen Vorteile, daß nun auch dünnschichtige Material bahnen in einwandfrei er Weise laminiert werden können, wobei die Materialbahnen den oben genannten Dimensionsbereich einnehmen können. Sie werden mit außerordentlich hoher Formstabilität laminiert, so daß es nun erstmals möglich ist, z.B. Oberflächendekorfolien für Brillen, für Uhrbänder,Kredit- und Kundenkarten und für andere beliebig dreidimensional mit diesen Folien zu beschichtende Gegenstände. Die Beschichtung mit den erfindungsgemäss hergestellten Folien erfolgt beispielsweise im In-Molding-Verfahren, wo die nach dem Verfahren hergestellte Folie z.B. in eine Spritzgußform eingelegt wird und dann direkt an den Gegenstand angespritzt wird.

Mit dem erfindungsgemässen Verfahren ist es demzufolge erstmals möglich, von der Rolle zu verarbeiten; es werden durchlaufende Material schichten von der Rolle abgezogen und mit dem erfindungsgemässen Verfahren verarbeitet.

Bisher war dies nicht möglich, denn man verwendete bisher taktweise arbeitende Pressen, wo z.B. eine Materialgröße von 30 x 50 cm verarbeitet werden konnte. Bei diesen Mehrplattenpressen handelt es sich um Pressplatten aus Stahlblechen, die paketweise mit dazwischenliegenden Materialschichten in einen Heizapparat gebracht werden und dort entsprechend laminiert werden unter Druck und Hitze, was mit dem Nachteil verbunden ist, daß durch paketweise Anordnung der Pressplatten ein ungleichmässiger Druck auf die einzelnen Material schichten und eine ungleichmässige Hitzeeinwirkung erbracht wird, was zu einer schlechten Qualität der Laminierwirkung führt. Ebenso ist die Wiederholgenauigkeit hierdurch beeinträchtigt und die Prozeßzeiten sind außerordentlich hoch, weil die paketweise angeordneten Pressplatten im Ganzen aufgeheizt und abgekühlt werden müssen.

Hier setzen die Vorteile des erfindungsgemässen Verfahrens ein, welches ein Durchlaufverfahren vorsieht, wo jede Stelle der behandelten Materialbahn durch ein und dieselbe Heiz- und Kühlzone nach dem gleichen Wärmezyklus hindurchläuft und demzufolge ein und dieselbe Materialbehandlung erfährt, während dies bei den besagten Mehrplattenpressen nicht der Fall war.

Statt dem hier beschriebenen Durchlaufverfahren, wo von der Rolle gearbeitet wird, gibt es die Möglichkeit, auch Bogenware zu verarbeiten, die jedoch stets - wie die Rollenware - im Durchlaufverfahren bearbeitet wird. Ebenso ist es möglich, durch das Laminierverfahren aus am Eingang eingespeisten Bogen eine durchlaufende Materialbahn zu erzeugen.

Vorstehend wurde erwähnt, daß es besonders vorteilhaft ist, jeweils paarweise angeordnete Zonen zu verwenden, d.h. entweder zwei Heizwalzenspalte oder Heizfelder zu schaffen und zwei Kühlwalzenspalte oder zwei Kühlfelder, wobei die Zwischenräume in Bearbeitungsrichtung möglichst eng sein sollten. Es können auch Felder und Spalte gemischt verwendet werden.

Die zu wählenden Abstände hängen von der Art und der Dicke der zu verarbeitenden Materialbahn, von der Durchlaufgeschwindigkeit und von anderen Verfahrensparametern ab.

Nach einer weiteren Ausgestaltung der vorliegenden Erfindung ist es auch möglich, anstatt jeweils paarweise gegenüberliegend angeordneten Zwei Heizzonen und zwei Kühlzonen eine anderen Anzahl zu wählen, wie z.B. drei Heizzonen in Verbindung mit zwei Kühlzonen oder umgekehrt auch zwei Heizzonen in Verbindung mit drei Kühlzonen.

Jede Zone wird durch mindestens zwei einander gegenüberliegende Walzen oder Felder definiert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Seitenansicht einer Vorrichtung nach der Erfindung,
- Figur 2:: die Stirnansicht der Vorrichtung nach Figur 1,
- Figur 3:: schematisiert in vereinfachter Ausführungsform eine Ausführung gemäss Figur 1,
- Figur 4:: schematisiert eine weitere Ausführungsform,
- Figur 5:: schematisiert eine dritte Ausführungsform.

Die Vorrichtung zur Durchführung des Verfahrens besteht im wesentlichen aus einem Maschinengestell 1, den beiden Heizwalzenpaaren 2 und 3, den beiden Kühlwalzenpaaren 4 und 5, dem angetriebenen Endlos-Band 6 mit der angetriebenen Umlenkwalze 7 und der spannbaren zweiten Umlenkwalze 8, der Bahnkantensteuerung 9 und den diversen gebremsten bzw. angetriebenen Ab- und Aufwickelstationen.

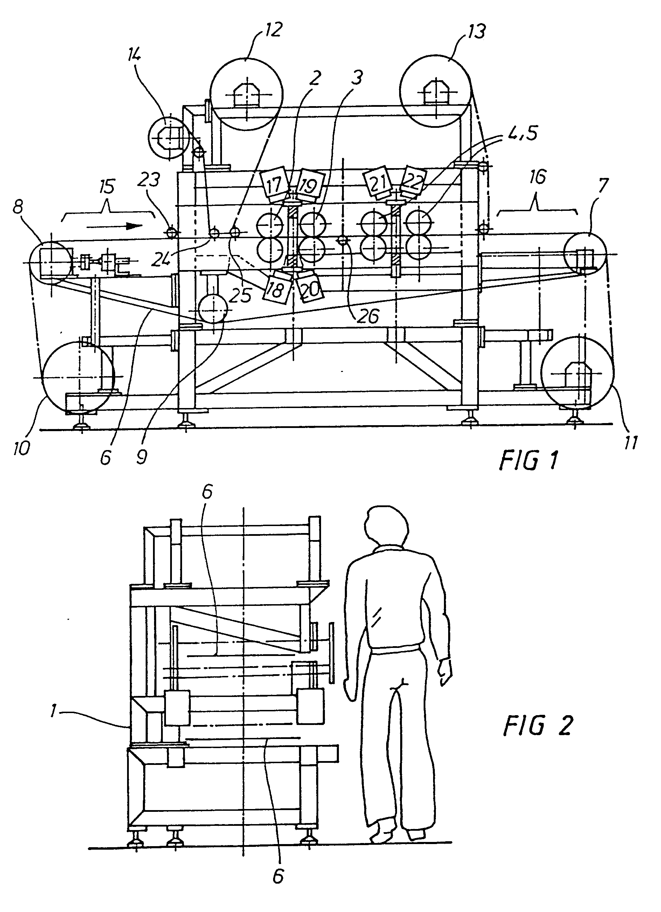

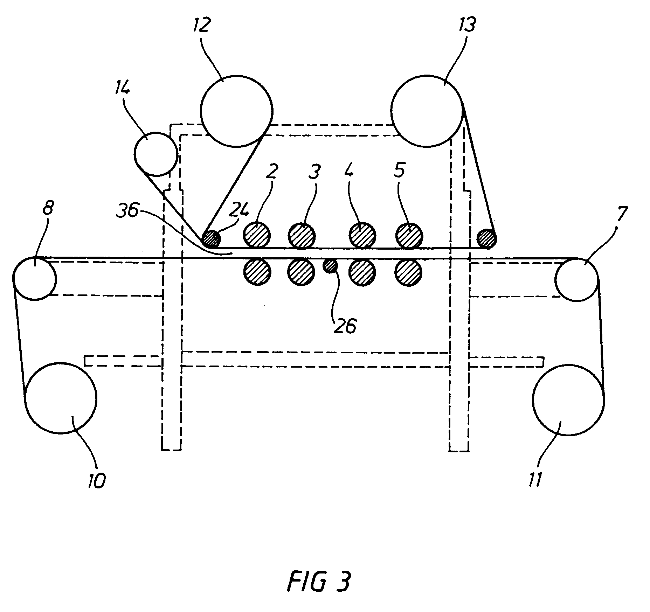

Gemäss den Figuren 1 und 3 wird die obere Texturfolie 12 von einer Abwickelstation abgewickelt und über eine erste einlaufseitig angeordnete Umlenkwalze geführt, über welche gleichzeitig auch die obere Overlay-Folie 14 geführt wird.

Am Auslauf der Maschine wird die obere Texturfolie bei 13 aufgewickelt, während die Overlay-Folie 14 auf dem fertiggestellten Laminat 36 verbleibt und mit diesem verbunden ist.

### Funktionsablauf:

Zu laminierende Produkte (Laminat 36), das sind bedruckte und unbedruckte Folien-Bögen bzw. Folien-Pakete, werden in der Einlegestation 15 und auf die untere Texturfolie gelegt bzw. auf das Endlosstahl-Band 6 und durch eine Niederhalte- und Einzugswalze 23 weitertransportiert. Wahlweise kann nun die Overlay-Folie in Bogenform oder von der Overlay-Folienstation 14 über eine Umlenkrolle 24 zugeführt werden, und über die Anpreß-Umlenkwalze 25 wird die obere Texturfolie von der oberen Texturfolienstation bzw. Trenn-Folie 12 auf das Folien-Paket gepreßt und läuft nun in das erste Heizwalzenpaar 2.

Bei einer typischen Transport/Laminiergeschwindigkeit von 1 bis 2 m/min übernimmt das erste Heizwalzenpaar 2 die Vorwärmung und das zweite Heizwalzenpaar 3 erwärmt das Laminierpaket über die diversen Textur- und Transportfolien auf die erforderliche Laminiertemperatur, typisch zwischen 150°C und 250°C. Für spezielle Produkte kann noch eine zusätzliche Strahlungsbeheizung zwischen den Heiz-und Kühlwalzen von der Oberseite oder vor den Heizwalzen angebracht werden.

Die beiden Kühlwalzen 4 und 5 kühlen, pressen und prägen nun das Laminat. Typische Preßkräfte der Heiz- und Kühlwalzen sind 100 bis 400 kg pro Zylinder.

Das fertige Laminat kann nun in Form von Bögen in der Entnahmestation 16 entnommen werden oder in "endloser" Form auf eigenen Aufwickelstationen bzw. Weiterverarbeitungsstationen entnommen werden.

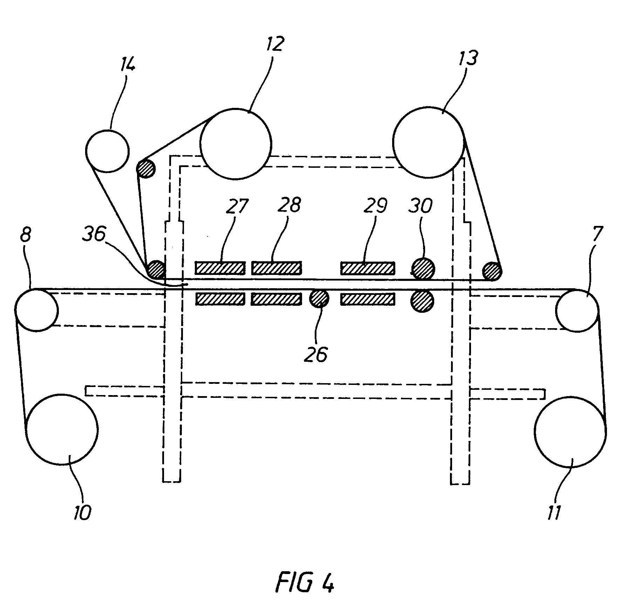

Während in dem Ausführungsbeispiel nach den Figuren 1 und 2 ein unteres, mitlaufendes Endlosband 6 beschrieben wurde, wird in den folgenden Ausführungsbeispielen auf ein derartiges Endlosband 6 verzichtet. Stattdessen wird in den weiteren Ausführungsbeispielen der Figuren 3 und 4 nachgewiesen, daß die Vorrichtung und das erfindungsgemässe Verfahren auch ohne ein unteres umlaufendes Endlosband, insbesondere ein Stahlband, funktioniert.

In der Ausführungsform nach Figur 3 wird hierbei die untere Texturfolie 10, 11 als Transportmedium in Verbindung mit der oberen Texturfolie 12,13 verwendet.

Ansonsten gelten für die gleichen Teile die gleichen Bezugszeichen.

Wichtig bei diesem Ausführungsbeispiel ist, daß nun der Maschinenaufbau wesentlich einfacher gestaltet werden kann, weil das vorher beschriebene Endlosband 6 vollständig entfällt.

Die Figur 4 zeigt, daß es statt der beschriebenen Heiz- und Kühlwalzenspalte 2,3; 4,5 auch mit sogenannten Heiz- und Kühlfeldern funktioniert. Es sind hierbei Heizspalte 27,28 hintereinanderliegend in Form von Heizzonen definiert, an welche sich ein oder mehrere Kühlspalte anschließen.

Im gezeigten Ausführungsbeispiel nach Figur 4 ist lediglich ein Kühlspalt 29 durch eine entsprechende Kühlzone geschaffen, während der nachgeschaltete Preßwalzenspalt 30 ggf. auch zusätzlich noch gekühlt sein kann.

Mit diesem Preßwalzenspalt 30 erfolgt der eigentliche Laminiervorgang, d.h. die Kontaktgabe von der oberen und unteren Texturfolie 10,11 bzw. 12,13 auf die obere und untere Fläche des Laminats 36.

Wichtig ist, daß bei dem Ausführungsbeispiel der Figur 4 kein Preßdruck durch die Heiz- und Kühlzonen 27,28 und 29,30 auf das Laminat 36 ausgeübt wird. Es wird lediglich im Bereich des Preßwalzenspalts 30 der erforderliche Anpreßdruck erzeugt.

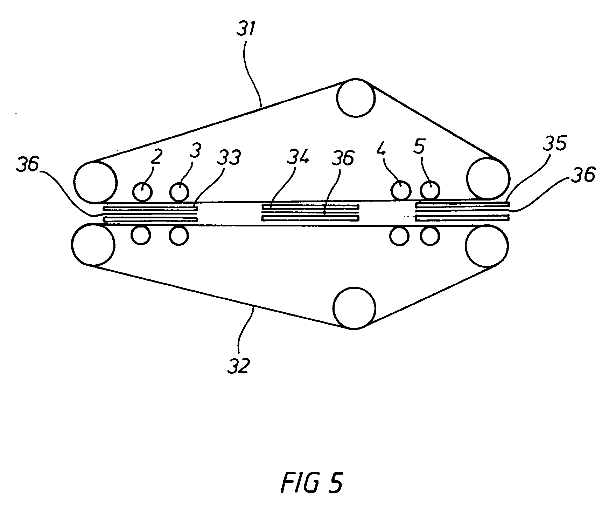

Im Ausführungsbeispiel nach Figur 5 ist als Transportmedium für das Laminat 36 eine sogenannte Texturtasche 33-35 vorgesehen. Dort sind mehrere Texturtaschen hintereinanderfolgend in ein oberes und unteres mitlaufendes Stahlband 31,32 eingespeist.

Jede Texturtasche 33 besteht aus einem Folienmaterial, z.B. einem Papier- oder Kunststoffmaterial, wobei das Laminat 36 in den Zwischenraum zwischen den beiden Folienmaterialien gelegt wird, so daß sich hierdurch eine Texturtasche 33,34,35 bildet.

Transportmedium und Aufnahmemedium für das Laminat ist also die jeweilige Texturtasche 33-35. Die genannten Texturtaschen 33-35 werden also in den Walzenspalt eines oberen und unteren mitlaufenden und angetriebenen Stahlbandes 31,32 eingespeist und durchlaufen die vorher beschriebenen Heiz- und Kühlzonen, die entweder als Heiz- und Kühlspalte oder auch als Heiz- und Kühlfelder ausgebildet sein können.

| ZEICHNUNGS-LEGENDE | | | |
|---|---|---|---|
| 1 | Maschinengestell | 25 | Umlenkwalze |
| 2 | Heizwalzenpaare | 26 | Ausstreichrolle |
| 3 | Heizwalzenpaar | 27 | Heizspalt |
| 4 | Kühlwalzenpaar | 28 | Heizspalt |
| 5 | Kühlwalzenpaar | 29 | Kühlspalt |
| 6 | Endlos-Band | 30 | Preßwalzenspalt |
| 7 | Umlenkwalze | 31 | Stahlband |
| 8 | Umlenkwalze | 32 | Stahlband |
| 9 | Bahnkantensteuerung | 33 | Texturtasche |
| 10 | Texturfolie unten gebremst | 34 | " |
| 11 | Texturfolie unten angetrieben | 35 | " |
| 12 | Texturfolie oben gebremst | 36 | Laminat |
| 13 | Texturfolie oben angetrieben | | |
| 14 | Overlay-Folie oben gebremst | | |
| 15 | Einlegestation | | |
| 16 | Entnahmestation | | |

## Patentansprüche

1. Verfahren zur Durchlauf-Laminierung von Folienmaterial, bei dem ein oberes umlaufendes Band mit seinem unteren Band-Trum in Richtung parallel zu einem zu beschichtenden Körper geführt wird,
wobei in den Zwischenraum zwischen diesem unteren Band-Trum und dem zu beschichtenden Körper eine Beschichtungsfolie eingeführt wird, die auf den zu beschichtenden Körper unter Anwendung von Druck und Hitze laminiert wird, **dadurch gekennzeichnet**, daß zur Behandlung der Oberfläche des Folienmaterial (Laminat 36) mindestens ein Transportmedium (Texturband 10-13 oder Texturtasche 33-35) vorgesehen ist, welches das Folienmaterial zwischen sich aufnimmt und von einer oder mehreren Heizzonen (2,3; 27,28) in ein oder mehrere Kühlzonen (4,5; 29,30) transportiert.

2. Vorrichtung zur Ausübung des Verfahrens nach Anspruch 1, **dadurch gekennzeichnet**, daß das Transportmedium mindestens ein Texturband ist, welches aus einer an der Einlaufseite der Vorrichtung angeordneten, von einer Rolle abgewickelten Texturfolie (10,12) gebildet ist, die parallel zum Folienmaterial mindestens durch einen Teil der Heiz- und Kühlzonen (2-5; 25-28) hindurch geführt ist und an der Auslaufseite der Vorrichtung von jeweils einer Rolle (Texturfolie 11,13) wieder aufgewickelt wird.

3. Vorrichtung nach Anspruch 2, **dadurch gekennzeichnet**, daß das Transportmedium als Texturtasche (33-35) ausgebildet ist, die aus zwei einander gegenüberliegenden, bogenförmigen Texturfolien besteht, zwischen die das zu behandelnde Laminat (36) eingelegt wird.

4. Vorrichtung nach Anspruch 3, **dadurch** **gekennzeichnet**, daß die Texturtasche (33-35) im Zwischenraum zwischen zwei angetriebenen, endlosen Stahlbändern (31,32) transportiert wird.

5. Vorrichtung nach Anspruch 4, **dadurch gekennzeichnet**, daß die Texturfolie (12,13; 10,11) aus einem Papier- oder Kunststoffmaterial besteht.

6. Vorrichtung nach Anspruch 2 bis 4, **dadurch gekennzeichnet**, daß das Endlos-Band (6) ein Stahlband ist.

7. Vorrichtung nach Anspruch 2 bis 4, **dadurch gekennzeichnet**, daß das Endlos-Band (6) ein Papierband ist.

8. Vorrichtung nach einem der Ansprüche 2 - 7, **dadurch gekennzeichnet**, daß das mehrschichtige Laminat (36) zunächst in einer oder mehreren Heizzonen (2,3; 27,28) bis zur thermoplastischen Verflüssigung erhitzt wird, und danach durch eine oder mehrere Kühlzonen (4,5; 29,30) transportiert wird, wo das noch thermoplastische verformbare Material fixiert wird und durch Kontakt mit dem Transportmedium (Texturband 10-13 oder Texturtasche 33-35) seine Oberflächenstruktur erhält.

9. Vorrichtung nach Anspruch 8, **dadurch gekennzeichnet**, daß die Heiz- und Kühlzonen durch Heiz- und Kühlwalzenspalte (2,3; 4,5) entsprechenden Walzen gebildet ist.

10. Vorrichtung nach Anspruch 8, **dadurch gekennzeichnet**, daß die Heiz- und Kühlzonen durch Heiz- und Kühlspalte (27,28; 29,30) zugeordneter Heiz- und Kühlfelder gebildet ist.

11. Vorrichtung nach einem der Ansprüche 2- 10, **dadurch gekennzeichnet**, daß im Raum zwischen oder nach den Kühlwalzenpaaren (4,5) mindestens eine die Oberfläche des Materials behandelnde Texturwalze angeordnet ist.

12. Vorrichtung nach einem der Ansprüche 2- 11, **dadurch gekennzeichnet**, daß im Zwischenraum zwischen dem letzten Heizwalzenpaar (3) und dem ersten Kühlwalzenpaar (4) eine Ausstreichrolle (26) unterhalb des Endlosbandes (6) angeordnet ist.
